# EUROPEAN PATENT APPLICATION

(11) **EP 4 647 920 A1**
(43) Date of publication of application: **12.11.2025**
(21) Application number: 24174673.4
(22) Date of filing: 07.05.2024
(51) Int. Cl.: G06F 11/36, G05B 23/02, G06F 11/28

(54) **TESTBENCH FOR ROBOT BEHAVIOR TREES**

(71) Applicant: Jungheinrich Aktiengesellschaft, 22047 Hamburg (DE)
(72) Inventor: Ngan, Calvin, 81543 Munich (DE); Maerz, Michael, 81373 Munich (DE); Gemignani, Guglielmo, 81369 München (DE)
(74) Representative: Stellbrink & Partner Patentanwälte mbB

(57) **Abstract**

The present invention relates to a method which comprises providing a behavior tree to a testing computer, wherein the behavior tree is configured to control a robot and comprises nodes including a root node and leaf nodes, wherein each node comprises computer instructions, wherein some of the nodes when executed cause the robot to perform respective tasks. The method further comprises testing with the testing computer the behavior tree, wherein testing the behavior tree comprises: executing the behavior tree for at least one execution cycle, recording execution data and comparing the execution data with expected execution data to determine a test result. The method further comprises revising the behavior tree based on the test result to generate a revised behavior tree for controlling the robot. The method also relates to a system and a computer program product comprising corresponding features.

## Description

The present invention is directed to controlling robots using behavior trees. In particular, the present invention is directed to testing behavior trees used to control robots.

Robots are increasingly being used in various industries and for various purposes. Recently, robots are increasingly being used in environments where the robots are not only performing simple tasks, but are performing more versatile tasks and are required to "make decisions", e.g., react to influences from the environment.

Behavior trees (BTs) have emerged as a popular approach for designing complex robot behaviors. For example, WO 2017/148830 A1 and US 2022/0244708 A1 relate to the use of behavior trees to control a robot.

To ensure the accuracy of the behavior trees, it can be beneficial to test them. Existing testing methods include unit testing and live testing. However, these techniques have limitations in providing comprehensive test coverage for BTs. In addition, reproducing problems encountered in real-world scenarios is challenging due to the need for accurate event replication on real hardware components, often requiring extensive human intervention.

Thus, there is a lack of robust infrastructure for BT integration testing, which is an obstacle for ensuring the reliable and efficient functioning of robots.

The present invention relates to a method. The method comprises providing a behavior tree to a testing computer. The behavior tree is configured to control a robot and comprises nodes including a root node and leaf nodes. Each node comprises computer instructions, wherein some of the nodes when executed cause the robot to perform respective tasks. The method further comprises testing with the testing computer the behavior tree. Testing the behavior tree comprises executing the behavior tree for at least one execution cycle, recording execution data, and comparing the execution data with expected execution data to determine a test result. The method further comprises revising the behavior tree based on the test result to generate a revised behavior tree for controlling the robot.

The present invention may thus provide a testbench that can execute or simulate behavior trees in a testing environment, in particular, behavior trees intended for controlling a robot. This can allow validating the robustness and accuracy of the behavior tree. Corollary, this can ensure that the robot being controlled by the behavior tree will behave as expected.

In particular, the method of the present invention may allow for the identification and correction of issues or inefficiencies in the robot's behavior, leading to a more reliable, robust and optimized robot operation.

Furthermore, testing the behavior tree with the testing computer may provide particularly easy, simple and time efficient means for testing behavior trees. On the one hand this can expedite development of behavior trees as skilled persons can rapidly iterate through various behavior tree configurations, accelerating the overall development and optimization of robotic systems. On the other hand, this can encourage continuous or frequent testing of behavior trees that may lead to continuous optimization thereof as erroneous, unnecessary, or redundant instructions within the behavior tree can be identified and eliminated.

The present invention may also allow testing behavior trees that can comprise tasks requiring hardware components, such as, sensor or actuators. Traditional testing methods often involve taking the robot offline for evaluation, leading to downtime. The present invention enables continuous evaluation without interrupting the robot's normal operations, ensuring minimal downtime in real-world applications. In other words, the present invention may alleviate the need of using a hardware-in-the-loop (e.g., sensors or actuators) for the purpose of testing the behavior tree.

The method can further comprise using the revised behavior tree to operate the robot. This may lead to enhanced overall performance of the robot, as the robot is controlled by a tested and more accurate behavior tree.

During each execution cycle, the behavior tree can be traversed from the root node to at least one of the leaf nodes according to a traversal path, wherein each of the nodes in the traversal path can be executed. The traversal path may be indicative of a specific route linking the root node with at least one of the leaf nodes. It will be understood that during an execution cycle, the behavior tree may start execution at the root node and may finish execution at any one of the leaf nodes. Additionally, the same leaf nodes may be arrived at from the root node via different routes. It may be advantageous that during an execution cycle the correct leaf node is executed and/or the correct route to that root node is traversed. These may be tested during an execution cycle.

The traversal path may depend on robot data. The robot data may be indicative of: at least one robot configuration, at least one robot part configuration, at least one sensor reading and/or at least one variable value of the behavior tree. For each execution cycle, different values can be assigned to the robot data, preferably such that an expected traversal path is known. Thus, for different robot data, the traversal path according to which the behavior tree is traversed can be determined via respective execution cycles. This can allow testing for different robot data whether the behavior tree behaves as expected.

The expected execution data can be indicative of at least one expected traversal path, each corresponding to a respective execution cycle, and wherein the test result can be indicative of whether each expected traversal path is traversed during the respective execution cycle. This way the expected execution data can provide the ground truth with respect to the traversal path that the behavior tree should traverse during each execution cycle. The actual traversal path can then be compared with the expected traversal path, i.e., the ground truth, to thereby determine whether the behavior tree executed correctly during an execution cycle.

The expected executed data can be indicative of at least one expected set of nodes, each corresponding to a respective execution cycle, and wherein the test result can be indicative of whether the nodes in each expected set of nodes are executed during the respective execution cycle. That is, for one or more execution cycles a loose comparison can be performed, wherein it can only be determined whether an expected set of nodes is executed or not, irrespective of the order of execution. This can be advantageous as it may allow for a fast generation of the test result. Such loose comparisons may be advantageous for instances wherein the order of node execution is not important, has been pre-checked or will be checked at a later stage. For example, loose comparisons may be performed during an initial testing of the behavior tree.

The test result can be indicative of whether any other node of the behavior tree in addition to each expected set of nodes can be executed during the respective execution cycle. This can ensure that nodes are not executed unnecessarily.

The expected executed data can be indicative of at least one expected sequence of nodes, each corresponding to a respective execution cycle, and wherein the test result can be indicative of whether the nodes in each expected sequence of nodes are executed during the respective execution cycle according to the respective expected sequence of nodes. That is, for one or more execution cycles a strict comparison can be performed, wherein not only can it be determined whether an expected set of nodes is executed or not, but also whether they are executed according to an expected order. This can be advantageous as it may provide more accurate test results, albeit less time efficient than the loose comparisons discussed above. Such strict comparisons may be advantageous for instances wherein the order of node execution is important. For example, strict comparisons may be performed during a final testing of the behavior tree.

Each node can be configured to return a node state when executed, wherein the node state can be selected from a list of node states.

The expected executed data can be indicative of at least one expected node state, each corresponding to a respective node for a respective execution cycle, and wherein the test result can be indicative of whether each expected node state can be returned by the respective node during the respective execution cycle. Thus, it may not only be determined whether an expected node is executed or not, but it can also be determined whether the expected node returned an expected state. Embodiments of the present invention may thus provide a highly granular level of verification by incorporating expected node states. This may allow for precise assessment of each node's behavior during execution cycles, ensuring that the internal states of the behavior tree align with the expected values.

At least one of the at least one expected node state can correspond to the root node. This may allow for a rough estimation on whether the behavior tree executed correctly or not. In particular, it can be used as an initial indication when the behavior tree is executed incorrectly. That is, if the root node returns an unexpected state, then it can be determined that the behavior tree comprises an error.

The behavior tree can comprise at least one variable and wherein at least one of the nodes can be configured to modify a value of the at least one variable when executed. The inclusion of variables in the behavior tree may enhance its functionality. Nodes configured to modify variable values may enable the robot to dynamically respond to changing conditions, expanding its capabilities to handle a variety of tasks efficiently. For example, via the behavior tree the robot may tune different variables to better adapt to the environment. The variables may also allow an operator to provide user defined parameters to the behavior tree.

The expected executed data can be indicative of at least one expected variable value, each corresponding to a respective variable for a respective execution cycle, and wherein the test result can be indicative of whether each variable value can be contained by the respective variable during the respective execution cycle. The expected executed data, indicative of expected variable values, can facilitate validation of variable values during testing. Moreover, testing variable values can allow testing the inner functionality of the nodes changing these variables or whether the variable is correctly passed from node to node.

At least one of the nodes can be a consuming node configured to receive input data and to process the input data. Typically, for executing a consuming node it may not be sufficient to simply tick them, but the input data may also need to be provided as input to that consuming node. It will be understood, that "ticking" in the context of behavior trees may refer to the process of calling a node of the behavior tree for execution. That is, when ticked, consuming nodes may expect or may request input data. Typically, the input data may be passed, i.e., provided, to the consuming node from another node, e.g., from a producing node, which is discussed below. Input data may also be provided via a user interface, e.g., as user data.

The expected executed data can be indicative of at least one expected input data, each corresponding to a respective consuming node for a respective execution cycle, and wherein the test result can be indicative of whether each expected input data can be received by the respective consuming node during the respective execution cycle. This can ensure that whenever a consuming node is ticked, it can also be provided with the required input data. In addition, the accuracy of the input data can be tested.

At least one of the nodes can be a producing node configured to output output data. Producing nodes can output data during or at the end of their execution. Typically, producing nodes can provide their output data to another node, i.e., to a consuming node.

The expected executed data can be indicative of at least one expected output data, each corresponding to a respective producing node for a respective execution cycle, and wherein the test result can be indicative of whether each expected output data can be output by the respective producing node during the respective execution cycle. This can ensure that whenever a producing node is executed, it outputs output data. In addition, the accuracy of the output data can be tested.

It will be understood that a node may be a consuming node and a producing node. That is, the consuming and producing characteristics of a node are not mutually exclusive.

That is, the behavior tree may be configured such that variables can be passed from node to node. The present invention may allow testing whether the process of variable passing from node to node is performed correctly and based thereon a corresponding test result can be generated.

Testing the behavior tree can comprise executing the behavior tree for a plurality of execution cycles until a terminating condition can be fulfilled. The terminating condition may be predetermined. For example, the terminating condition may be a user defined parameter. Once the terminating condition is fulfilled, execution of the behavior tree may be stopped.

Comparing the execution data with expected execution data can comprise determining whether the terminating condition can be fulfilled for an expected number of execution cycles and wherein the execution data can be indicative of the expected number of execution cycles. The ability to assess termination conditions over an expected number of execution cycles may contribute to predictable behavior of the behavior tree. In particular, the expected duration of specific behaviors can be defined and verified, thus ensuring that the robot can perform certain actions for the required duration.

The terminating condition can be indicative of a particular behavior tree execution. That is, the terminating condition can be fulfilled during a particular execution of the behavior tree.

The terminating condition can comprise the behavior tree being traversed according to a target traversal path.

The terminating condition can comprise execution of at least one target node selected from the nodes of the behavior tree.

One of the at least one target node can be selected from the leaf nodes of the behavior tree.

The terminating condition can comprise at least one target node selected from the nodes of the behavior tree returning at least one target state selected from the list of node states.

The terminating condition can comprise the root node returning a target state selected from the list of node states.

For example, the terminating condition may be "Execute until the leaf node corresponding to a pick-up up task is successfully executed in an environment without humans". For this, the behavior tree may need, e.g., 6 execution cycles, wherein in each one the behavior tree may respectively execute leaf nodes that corresponds to the tasks of (1) checking for humans, (2) selecting object to pick, (3) computing a navigation path, (4) navigating, (5) detecting object and (6) pick object. If the behavior tree skips one of the above tasks and/or performs other tasks, then it may arrive at the terminating condition with fewer or more execution cycles. Such deviations may be identified by embodiments of the present invention.

The test result can comprise a pass indication or a failure indication. A pass indication may indicate an accurate execution of the behavior tree, wherein the behavior tree executes as expected. A failure indication may indicate an erroneous execution of the behavior tree, wherein the behavior tree executes in an unexpected manner.

Revising the behavior tree based on the test result can comprise revising the behavior tree upon the failure indication. This way, the erroneous behavior of the behavior tree, as indicated by the failure indication, can be corrected.

The test result can comprise the pass indication if the execution data match the expected execution data and the failure indication otherwise. If the execution data match the expected execution data, it can be inferred that the behavior tree behaves as expected, and therefore a pass indication can be generated as a test result. However, if the execution data do not match the expected execution data, it can be inferred that the behavior tree behaves unexpectedly, and therefore a failure indication can be generated. The latter may facilitate correcting the behavior tree such that unexpected behaviors are removed.

The test result can be indicative of a difference between the executed data and the expected executed data.

Comparing the execution data with expected execution data can be based on a comparison criterion selected from a range of comparison criteria wherein some are stricter than others. A higher degree of similarity can be expected between the execution data and the expected execution data when a stricter comparison criterion can be used than when a looser comparison criterion can be used. For example, one comparison criterion may comprise determining whether two parameters are equal and another comparison criterion may comprise determining whether two parameters are within a range of each other. The former comparison criterion may be stricter than the latter. Yet another comparison criterion may comprise determining whether two traversal paths are exactly the same and another and looser comparison criterion may comprise determining whether two traversal paths comprise the same nodes (without particular importance to the order of the nodes).

The test result can comprise a pass indication if the execution data and the expected execution data can comprise a degree of similarity higher than a threshold and a failure indication otherwise. The degree of similarity can be calculated based on the comparison between the execution data and the expected execution data.

Executing the behavior tree can comprise mocking at least one of the nodes, wherein mocking at least one of the nodes can comprise, for each node being mocked, executing respective mock computer instructions instead of the computer instructions of the node being mocked. That is, instead of executing the actual computer instructions of a node, a simulated behavior of that node can be executed instead. This can, for example, allow isolating the functionality of the behavior tree that is being tested from external dependencies, such as hardware or network connections. Alternatively or additionally, mocking may eliminate the need to execute real computer instructions that are time-consuming or resource-intensive. Mocking may also eliminate the need to execute real computer instructions of nodes already being tested, e.g., via unit test. This way the time and resource efficiency of a behavior tree can be increased.

Executing respective mock computer instructions instead of the computer instructions of the node being mocked can comprise monkey-patching the respective mock computer instructions to the respective node being mocked. That is, the computer instructions of the node being mocked can be modified at runtime during the test. This way, the mock computer instructions would not have to be comprised by the node in the behavior tree.

Mocking at least one of the nodes can comprise selecting the respective mock computer instructions from a list of mock computer instructions. The selection can be made during run time of the testing.

Selecting the respective mock computer instructions can be based on the execution cycle. This can allow dynamically changing the behavior of a mocked node. This way the behavior of the node being mocked can be more accurately simulated. For example, a node can be mocked to return on one execution cycle the state "RUNNING" and on the next execution cycle the state "SUCCESS".

Selecting the respective mock computer instructions can be based on a number of prior executions of the respective node being mocked during the testing.

The list of mock computer instructions can comprise mock computer instructions configured to return node states, wherein different mock computer instructions return different node states.

The list of mock computer instructions can comprise modifying one of the at least one variable of the behavior tree.

The method can comprise providing test data prior to testing the behavior tree. The test data can comprise parameters needed for executing the behavior during the test and parameters needed for determining the test result.

The test data can comprise the expected execution data.

The test data can comprise initial variable values for initializing one or more of the at least one variable of the behavior tree.

The test data can comprise a number of execution cycles to execute the behavior tree during the testing.

The test data can comprise a list of the nodes to be mocked.

The test data can comprise the list of mock computer instructions.

The test data can comprise the list of the nodes to be mocked associated with the list of mock computer instructions.

The test data can comprise at least one node parameter required by at least one of the nodes for execution.

The test data can comprise a computer representation of the behavior tree.

Testing with the testing computer the behavior tree can comprise executing with the testing computer a testbench module wherein the testbench module can comprise computer instructions which when executed by the testing computer cause the testing computer to test the behavior tree.

The testbench module can comprise a behavior tree server module configured to execute the behavior tree.

The method can comprise the behavior tree server module receiving a computer representation of the behavior tree and generating the behavior tree based on the computer representation.

The testbench module can comprise a test loader module configured to obtain the test data.

The method can comprise the test loader module providing the test data to the behavior tree server module.

The method can comprise the test loader module providing the computer representation of the behavior tree to the behavior tree server module.

The testbench module can comprise a task monitor module configured to record the execution data.

The task monitor module can record, for every node executed during the testing, a respective unique identifier of the node. This can facilitate tracking the behavior of each node.

The task monitor module can record, for every node executed during the testing, a respective type of the node.

The task monitor module can record, for at least one consuming node, the respective input data before and/or after execution of the consuming node.

The task monitor module can record, for at least one producing node, the respective output data before and/or after execution of the producing node.

The task monitor module can record, for at least one node configured to modify the at least one variable of the behavior tree, the value of the variable immediately before and/or immediately after execution of the node.

The task monitor module can record, for at least one variable of the behavior tree, the value of the variable before and/or after the variable changes its value.

The task monitor module can record, for each execution cycle, a sequence in which the nodes are executed during the execution cycle.

The task monitor module can record, for at least one execution cycle, the node state of the root node after the execution cycle.

The task monitor module can record, for at least one node of the behavior tree, the respective node state before and/or after execution of the at least one node.

The testbench module can comprise a checker module configured to compare the execution data with the expected execution data to determine the test result.

The task monitor module can provide the execution data to the checker module.

The test loader module can provide the expected execution data to the checker module.

The checker module can output the test result.

The testbench module can comprise a mock manager module configured to determine which of the nodes to mock.

The mock manager module can receive from the test loader module a list of nodes to mock and a list of mock computer instructions for each of the nodes in the list of nodes to mock.

The mock manager module can monkey-patch the respective mock computer instructions to the respective node being mocked.

The mock manager module can provide the mock computer instructions for each node being mocked to the behavior tree server module.

The testbench module can comprise a tick controller module configured to control the number of execution cycles of the behavior tree.

The method can comprise generating with a behavior tree editor module a graphical representation of the behavior tree.

The graphical representation can indicate the nodes of the behavior tree and the connections between the nodes. This can provide an intuitive and easy-to-understand visualization of the behavior tree - thus making it easier and quicker to create and/or edit behavior trees.

The graphical representation can indicate during the behavior tree execution, the node being executed at any instant. This can allow a more ergonomic inspection of the behavior tree.

The graphical representation can be displayed on a display.

The method can comprise utilizing the behavior tree editor module to revise the behavior tree based on the test result.

The method can comprise utilizing the behavior tree editor module to generate the computer representation of the behavior tree and to provide the computer representation of the behavior tree to the behavior tree server module.

The testbench module can comprise the behavior tree editor module.

The method can comprise utilizing a node coverage module to count the number of nodes executed during the testing and/or to track which nodes are executed during the testing.

The testbench module can comprise the node coverage module.

The behavior tree can comprise intermediate nodes and wherein at least some of the leaf nodes are connected with the root node via the intermediate nodes.

The nodes are connected with directed edges.

The root node has no incoming edges and one outgoing edge and the leaf nodes have no outgoing edges and one incoming edge

The intermediate nodes can comprise one incoming edge and one or more outgoing edges.

Each of the directed edges connects a respective pair of the nodes by originating from one of the nodes, which can be defined as a parent node in the pair, towards the other node in the pair, which can be defined as a child node in the pair.

Each child node can be configured to return its node state to its parent node.

The node state of each parent node depends on the node state of at least one of its child nodes.

Executing the behavior tree can comprise each parent node calling one or more of its child nodes.

Executing the behavior tree for one execution cycle can comprise calling the root node once.

The list of node states can comprise: success, running and failure.

The list of node states can comprise an initialized state, wherein the state initialized can indicate that a node has been initialized and can be ready for execution.

The list of node states can comprise a suspended state, wherein the state suspended can indicate that a node has been paused.

The list of node states can comprise an invalid state, wherein the state invalid can indicate that a node has been created, but can be not ready for execution yet.

The list of node states can comprise an aborted state, wherein the state aborted can indicate that a node itself has stopped execution of this node.

The list of node states can comprise a preempted state, wherein the state preempted can indicate that a user or a behavior tree executive has stopped the execution of the node.

One of the at least one variable of the behavior tree can be a local node variable for a single node.

The local node variable can be passed from one node to another.

One of the at least one variable of the behavior tree can be a local sub-tree variable for a sub-tree of the behavior tree.

The local sub-tree variable can be passed from one sub tree to another.

The robot can be an autonomous robot, such as an autonomous forklift.

The robot can include a mobile base and/or a manipulator.

The robot can be an autonomously driving robot.

The robot can be adapted to pick up objects.

The robot can include a sensor and the method can include sensing information by means of the sensor and effecting the robot to respond to the information.

The robot can comprise a drive unit configured to move the robot.

The robot can comprise a pick-up unit configured to pick up at least one object.

The pick-up unit can comprise at least one gripper.

The robot can comprise a shelf unit configured to store at least one object.

The tick controller module can obtain the number of execution cycles from the test loader module.

One of the at least one variable can be an input variable provided as input to the root node.

The input variable can be passed from one node to another.

The input variable can be provided to the root node by a user.

The input data can comprise at least one of the at least one variable.

The output data can comprise at least one of the at least one variable.

The present invention also relates to a system comprising a testing computer wherein the system can be configured to carry out the method according to any of the preceding method embodiments.

The system can further comprise a robot, such as an autonomous forklift.

The robot may include a mobile base and/or a manipulator.

The robot can be an autonomously driving robot.

The robot can be adapted to pick up objects.

The robot may include a sensor configured to sense information and the robot may be configured to be affected to respond to the information. That is, the robot may perform an action based on the information.

The robot can comprise a drive unit configured to move the robot.

The robot can comprise a pick-up unit configured to pick up at least one object.

The pick-up unit can comprise at least one gripper.

The robot can comprise a shelf unit configured to store at least one object.

The testing computer can be a data processing system.

The testing computer can be configured to execute the testbench module.

The testing computer can comprise a processing unit, such as, a central processing unit.

The testing computer can comprise a memory component.

The memory component may store the testbench module.

The testing computer can comprise an external communication component configured to send and/or receive data to/from an external device.

The testing computer can comprise an internal communication component configured to allow internal components of the testing computer to communicate with each other.

The internal communication component can comprise a bus.

The testing computer can comprise an input user interface configured to allow a user of the testing computer to provide at least one input to the testing computer.

The testing computer can comprise an output user interface.

The output user interface can comprise a display configured to display a graphical representation of the behavior tree.

The display can be configured to display the graphical representation generated by the behavior tree editor module.

The robot can comprise a linear stage configured to carry at least one object and to change a vertical position of the object.

The method can comprise utilizing the system of the present invention.

The present invention further relates to a computer program product comprising instructions which when executed by a system comprising a testing computer and further optionally a robot, causes the system to carry out the method of the present invention.

The present invention further relates to a computer program product comprising instructions which when executed by a testing computer, causes the testing computer to carry out the method of the present invention.

The computer program product may comprise the testbench module.

The testbench module can comprise any of the modules, as discussed.

The present invention is also defined by the following numbered embodiments.

Below, method embodiments will be discussed. These embodiments are abbreviated by the letter "M" followed by a number. When reference is herein made to method embodiments, these embodiments are meant.
M1. A method comprising
   providing a behavior tree (20) to a testing computer (40), wherein the behavior tree (20) is configured to control a robot (100) and comprises nodes including a root node (201) and leaf nodes (206-224), wherein each node comprises computer instructions, wherein some of the nodes when executed cause the robot (100) to perform respective tasks;
   testing with the testing computer (40) the behavior tree (20), wherein testing the behavior tree (20) comprises:
      executing the behavior tree (20) for at least one execution cycle,
      recording execution data (314), and
      comparing the execution data (314) with expected execution data (318) to determine a test result (320); and
      wherein the method further comprises:
         revising the behavior tree (20) based on the test result (320) to generate a revised behavior tree (20) for controlling the robot (100).
M2. The method according to the preceding embodiment, wherein the method further comprises using the revised behavior tree (20) to operate the robot (100).
M3. The method according to any of the preceding embodiments, wherein during each execution cycle, the behavior tree (20) is traversed from the root node (201) to at least one of the leaf nodes (206-224) according to a traversal path, wherein each of the nodes in the traversal path is executed.
M4. The method according to any of the preceding embodiments, wherein the expected execution data (318) is indicative of at least one expected traversal path, each corresponding to a respective execution cycle, and wherein the test result (320) is indicative of whether each expected traversal path is traversed during the respective execution cycle.
M5. The method according to any of the preceding embodiments, wherein the expected executed data is indicative of at least one expected set of nodes, each corresponding to a respective execution cycle, and wherein the test result (320) is indicative of whether the nodes in each expected set of nodes are executed during the respective execution cycle.
M6. The method according to the preceding embodiment, wherein the test result (320) is indicative of whether any other node of the behavior tree (20) in addition to each expected set of nodes is executed during the respective execution cycle.
M7. The method according to any of the preceding embodiments, wherein the expected executed data is indicative of at least one expected sequence of nodes, each corresponding to a respective execution cycle, and wherein the test result (320) is indicative of whether the nodes in each expected sequence of nodes are executed during the respective execution cycle according to the respective expected sequence of nodes.
M8. The method according to any of the preceding embodiments, wherein each node is configured to return a node state when executed, wherein the node state is selected from a list of node states.
M9. The method according to the preceding embodiment, wherein the expected executed data is indicative of at least one expected node state, each corresponding to a respective node for a respective execution cycle, and wherein the test result (320) is indicative of whether each expected node state is returned by the respective node during the respective execution cycle.
M10. The method according to the preceding embodiment, wherein at least one of the at least one expected node state corresponds to the root node (201).
M11. The method according to any of the preceding embodiments, wherein the behavior tree (20) comprises at least one variable and wherein at least one of the nodes is configured to modify a value of the at least one variable when executed.
M12. The method according to the preceding embodiment, wherein the expected executed data is indicative of at least one expected variable value, each corresponding to a respective variable for a respective execution cycle, and wherein the test result (320) is indicative of whether each variable value is contained by the respective variable during the respective execution cycle.
M13. The method according to any of the preceding embodiments, wherein at least one of the nodes is a consuming node configured to receive input data and to process the input data.
M14. The method according to the preceding embodiment, wherein the expected executed data is indicative of at least one expected input data, each corresponding to a respective consuming node for a respective execution cycle, and wherein the test result (320) is indicative of whether each expected input data is received by the respective consuming node during the respective execution cycle.
M15. The method according to any of the preceding embodiments, wherein at least one of the nodes is a producing node configured to output output data.
M16. The method according to the preceding embodiment, wherein the expected executed data is indicative of at least one expected output data, each corresponding to a respective producing node for a respective execution cycle, and wherein the test result (320) is indicative of whether each expected output data is output by the respective producing node during the respective execution cycle.
M17. The method according to any of the preceding embodiments, wherein testing the behavior tree (20) comprises executing the behavior tree (20) for a plurality of execution cycles until a terminating condition is fulfilled.
M18. The method according to the preceding embodiment, wherein comparing the execution data (314) with expected execution data (318) comprises determining whether the terminating condition is fulfilled for an expected number of execution cycles and wherein the execution data (314) is indicative of the expected number of execution cycles.
M19. The method according to any of the 2 preceding embodiments, wherein the terminating condition is indicative of a particular behavior tree (20) execution.
M20. The method according to any of the 3 preceding embodiments, wherein the terminating condition comprises the behavior tree (20) being traversed according to a target traversal path.
M21. The method according to any of the 4 preceding embodiments, wherein the terminating condition comprises execution of at least one target node selected from the nodes of the behavior tree (20).
M22. The method according to the preceding embodiment, wherein one of the at least one target node is selected from the leaf nodes (206-224) of the behavior tree (20).
M23. The method according to any of the 2 preceding embodiments and with the features of embodiment M8, wherein the terminating condition comprises at least one target node selected from the nodes of the behavior tree (20) returning at least one target state selected from the list of node states.
M24. The method according to any of the 7 preceding embodiments and with the features of embodiment M8, wherein the terminating condition comprises the root node (201) returning a target state selected from the list of node states.
M25. The method according to any of the preceding embodiments, wherein the test result (320) comprises a pass indication or a failure indication.
M26. The method according to the preceding embodiment, wherein revising the behavior tree (20) based on the test result (320) comprises revising the behavior tree (20) upon the failure indication.
M27. The method according to any of the 2 preceding embodiments, wherein the test result (320) comprises the pass indication if the execution data (314) match the expected execution data (318) and the failure indication otherwise.
M28. The method according to any of the 3 preceding embodiments, wherein the test result (320) is indicative of a difference between the executed data and the expected executed data.
M29. The method according to any of the preceding embodiments, wherein comparing the execution data (314) with expected execution data (318) is based on a comparison criterion selected from a range of comparison criteria wherein some are stricter than others and a higher degree of similarity is expected between the execution data (314) and the expected execution data (318) when a stricter comparison criterion is used than when a looser comparison criterion is used.
M30. The method according to the preceding embodiment, wherein the test result (320) comprises a pass indication if the execution data (314) and the expected execution data (318) comprise a degree of similarity higher than a threshold and a failure indication otherwise.
M31. The method according to the any of the preceding embodiments, wherein executing the behavior tree (20) comprises mocking at least one of the nodes, wherein mocking at least one of the nodes comprises, for each node being mocked, executing respective mock computer instructions instead of the computer instructions of the node being mocked.
M32. The method according to the preceding embodiment, wherein executing respective mock computer instructions instead of the computer instructions of the node being mocked comprises monkey-patching the respective mock computer instructions to the respective node being mocked.
M33. The method according to the any of the 2 preceding embodiments, wherein mocking at least one of the nodes comprises selecting the respective mock computer instructions from a list of mock computer instructions.
M34. The method according to the preceding embodiment, wherein selecting the respective mock computer instructions is based on the execution cycle.
M35. The method according to the any of the 2 preceding embodiments, wherein selecting the respective mock computer instructions is based on a number of prior executions of the respective node being mocked during the testing.
M36. The method according to the any of the 3 preceding embodiments and with the features of embodiment M8, wherein the list of mock computer instructions comprises mock computer instructions configured to return node states, wherein different mock computer instructions return different node states.
M37. The method according to the any of the 4 preceding embodiments and with the features of embodiment M11, wherein the list of mock computer instructions comprises modifying one of the at least one variable of the behavior tree (20).
M38. The method according to the any of the preceding embodiments, wherein the method comprises providing test data (301) prior to testing the behavior tree (20).
M39. The method according to the preceding embodiment, wherein the test data (301) comprise the expected execution data (318).
M40. The method according to the any of the 2 preceding embodiments and with the features of embodiment M11, wherein the test data (301) comprise initial variable values for initializing one or more of the at least one variable of the behavior tree (20).
M41. The method according to the any of the 3 preceding embodiments, wherein the test data (301) comprise a number of execution cycles to execute the behavior tree (20) during the testing.
M42. The method according to the any of the 4 preceding embodiments and with the features of embodiment M31, wherein the test data (301) comprise a list of the nodes to be mocked.
M43. The method according to the any of the 5 preceding embodiments and with the features of embodiment M33, wherein the test data (301) comprise the list of mock computer instructions.
M44. The method according to the 2 preceding embodiments, wherein the test data (301) comprises the list of the nodes to be mocked associated with the list of mock computer instructions.
M45. The method according to the any of the 7 preceding embodiments, wherein the test data (301) comprises at least one node parameter required by at least one of the nodes for execution.
M46. The method according to the any of the 8 preceding embodiments, wherein the test data (301) comprises a computer representation of the behavior tree (20).
M47. The method according to the any of the preceding embodiments, wherein testing with the testing computer (40) the behavior tree (20) comprises executing with the testing computer (40) a testbench module (30) wherein the testbench module (30) comprises computer instructions which when executed by the testing computer (40) cause the testing computer (40) to test the behavior tree (20).
M48. The method according to the preceding embodiment, wherein the testbench module (30) comprises a behavior tree server module (304) configured to execute the behavior tree (20).
M49. The method according to the preceding embodiment, wherein the method comprises the behavior tree server module (304) receiving a computer representation of the behavior tree (20) and generating the behavior tree (20) based on the computer representation.
M50. The method according to any of the 3 preceding embodiments and with the features of embodiment M38, wherein the testbench module (30) comprises a test loader module (302) configured to obtain the test data (301).
M51. The method according to the preceding embodiment and with the features of embodiment M48, wherein the method comprises the test loader module (302) providing the test data (301) to the behavior tree server module (304).
M52. The method according to any of the 2 preceding embodiments and with the features of embodiment M49, wherein the method comprises the test loader module (302) providing the computer representation of the behavior tree (20) to the behavior tree server module (304).
M53. The method according to any of the 6 preceding embodiments, wherein the testbench module (30) comprises a task monitor module (312) configured to record the execution data (314).
M54. The method according to the preceding embodiment, wherein the task monitor module (312) records, for every node executed during the testing, a respective unique identifier of the node.
M55. The method according to any of the 2 preceding embodiments, wherein the task monitor module (312) records, for every node executed during the testing, a respective type of the node.
M56. The method according to any of the 3 preceding embodiments and with the features of embodiment M13, wherein the task monitor module (312) records, for at least one consuming node, the respective input data before and/or after execution of the consuming node.
M57. The method according to any of the 4 preceding embodiments and with the features of embodiment M15, wherein the task monitor module (312) records, for at least one producing node, the respective output data before and/or after execution of the producing node.
M58. The method according to any of the 5 preceding embodiments and with the features of embodiment M11, wherein the task monitor module (312) records, for at least one node configured to modify the at least one variable of the behavior tree (20), the value of the variable immediately before and/or immediately after execution of the node.
M59. The method according to any of the 6 preceding embodiments and with the features of embodiment M11, wherein the task monitor module (312) records, for at least one variable of the behavior tree (20), the value of the variable before and/or after the variable changes its value.
M60. The method according to any of the 7 preceding embodiments, wherein the task monitor module (312) records, for each execution cycle, a sequence in which the nodes are executed during the execution cycle.
M61. The method according to any of the 8 preceding embodiments and with the features of embodiment M8, wherein the task monitor module (312) records, for at least one execution cycle, the node state of the root node (201) after the execution cycle.
M62. The method according to any of the 9 preceding embodiments and with the features of embodiment M8, wherein the task monitor module (312) records, for at least one node of the behavior tree (20), the respective node state before and/or after execution of the at least one node.
M63. The method according to any of the preceding embodiments and with the features of embodiment M47, wherein the testbench module (30) comprises a checker module (316) configured to compare the execution data (314) with the expected execution data (318) to determine the test result (320).
M64. The method according to the preceding embodiment and with the features of embodiment M53, wherein the task monitor module (312) provides the execution data (314) to the checker module (316).
M65. The method according to any of the 2 preceding embodiments and with the features of embodiment M50, wherein the test loader module (302) provides the expected execution data (318) to the checker module (316).
M66. The method according to any of the 3 preceding embodiments, wherein the checker module (316) outputs the test result (320).
M67. The method according to any of the preceding embodiments and with the features of embodiments M31 and M47, wherein the testbench module (30) comprises a mock manager module (308) configured to determine which of the nodes to mock.
M68. The method according to the preceding embodiment and with the features of embodiment M50, wherein the mock manager module (308) receives from the test loader module (302) a list of nodes to mock and a list of mock computer instructions for each of the nodes in the list of nodes to mock.
M69. The method according to any of 2 preceding embodiments, wherein the mock manager module (308) monkey-patches the respective mock computer instructions to the respective node being mocked.
M70. The method according to any of 2 preceding embodiments and with the features of embodiment M48, wherein the mock manager module (308) provides the mock computer instructions for each node being mocked to the behavior tree server module (304).
M71. The method according to any of the preceding embodiments and with the features of embodiment M47, wherein the testbench module (30) comprises a tick controller module (306) configured to control the number of execution cycles of the behavior tree (20).
M72. The method according to any of the preceding embodiments, wherein the method comprises generating with a behavior tree editor module (310) a graphical representation of the behavior tree (20).
M73. The method according to the preceding embodiment, wherein the graphical representation indicates the nodes of the behavior tree (20) and the connections between the nodes.
M74. The method according to any of the 2 preceding embodiments, wherein the graphical representation indicates during the behavior tree (20) execution, the node being executed at any instant.
M75. The method according to any of the 3 preceding embodiments, wherein the graphical representation is displayed on a display.
M76. The method according to any of the 4 preceding embodiments, wherein the method comprises utilizing the behavior tree editor module (310) to revise the behavior tree (20) based on the test result (320).
M77. The method according to any of the 5 preceding embodiments and with the features of embodiment M49, wherein the method comprises utilizing the behavior tree editor module (310) to generate the computer representation of the behavior tree (20) and to provide the computer representation of the behavior tree (20) to the behavior tree server module (304).
M78. The method according to any of the 6 preceding embodiments and with the features of embodiment M47, wherein the testbench module (30) comprises the behavior tree editor module (310).
M79. The method according to any of the preceding embodiments, wherein the method comprises utilizing a node coverage module (322) to count the number of nodes executed during the testing and/or to track which nodes are executed during the testing.
M80. The method according to the preceding embodiment and with the features of embodiment M47, wherein the testbench module (30) comprises the node coverage module (322).
M81. The method according to any of the preceding embodiments, wherein the behavior tree (20) comprises intermediate nodes (202-205) and wherein at least some of the leaf nodes (206-224) are connected with the root node (201) via the intermediate nodes (202-205).
M82. The method according to any of the preceding embodiments, wherein the nodes are connected with directed edges.
M83. The method according to the preceding embodiment, wherein the root node (201) has no incoming edges and one outgoing edge and the leaf nodes (206-224) have no outgoing edges and one incoming edge
M84. The method according to any of the 2 preceding embodiments and with the features of embodiment M81, wherein the intermediate nodes (202-205) comprise one incoming edge and one or more outgoing edges.
M85. The method according to any of the 3 preceding embodiments, wherein each of the directed edges connects a respective pair of the nodes by originating from one of the nodes, which is defined as a parent node in the pair, towards the other node in the pair, which is defined as a child node in the pair.
M86. The method according to the preceding embodiment and with the features of embodiment M8, wherein each child node is configured to return its node state to its parent node.
M87. The method according to any of the 2 preceding embodiments and with the features of embodiment M8, wherein the node state of each parent node depends on the node state of at least one of its child nodes.
M88. The method according to any of the 3 preceding embodiments, wherein executing the behavior tree (20) comprises each parent node calling one or more of its child nodes.
M89. The method according to any of the 4 preceding embodiments, wherein executing the behavior tree (20) for one execution cycle comprises calling the root node (201) once.
M90. The method according to any of the preceding embodiments and with the features of embodiment M8, wherein the list of node states comprises: success, running and failure.
M91. The method according to any of the preceding embodiments and with the features of embodiment M8, wherein the list of node states comprises an initialized state, wherein the state initialized indicates that a node has been initialized and is ready for execution.
M92. The method according to any of the preceding embodiments and with the features of embodiment M8, wherein the list of node states comprises a suspended state, wherein the state suspended indicates that a node has been paused.
M93. The method according to any of the preceding embodiments and with the features of embodiment M8, wherein the list of node states comprises an invalid state, wherein the state invalid indicates that a node has been created, but is not ready for execution yet.
M94. The method according to any of the preceding embodiments and with the features of embodiment M8, wherein the list of node states comprises an aborted state, wherein the state aborted indicates that a node itself has stopped execution of this node.
M95. The method according to any of the preceding embodiments and with the features of embodiment M8, wherein the list of node states comprises a preempted state, wherein the state preempted indicates that a user or a behavior tree executive has stopped the execution of the node.
M96. The method according to any of the preceding embodiments and with the features of embodiment M11, wherein one of the at least one variable of the behavior tree (20) is a local node variable for a single node.
M97. The method according to the preceding embodiment, wherein the local node variable is passed from one node to another.
M98. The method according to any of the preceding embodiments and with the features of embodiment M11, wherein one of the at least one variable of the behavior tree (20) is a local sub-tree variable for a sub-tree of the behavior tree (20).
M99. The method according to the preceding embodiment, wherein the local sub-tree variable is passed from one sub tree to another.
M 100. The method according to any of the preceding embodiments, wherein the robot (100) is an autonomous robot (100), such as an autonomous forklift.
M101. The method according to any of the preceding embodiments, wherein the robot (100) includes a mobile base and/or a manipulator.
M 102. The method according to any of the preceding embodiments, wherein the robot (100) is an autonomously driving robot (100).
M 103. The method according to any of the preceding embodiments, wherein the robot (100) is adapted to pick up objects.
M 104. The method according to any of the preceding embodiments, wherein the robot (100) includes a sensor and the method includes sensing information by means of the sensor and effecting the robot (100) to respond to the information.
M105. The method according to any of the preceding embodiments, wherein the robot (100) comprises a drive unit configured to move the robot (100).
M106. The method according to any of the preceding embodiments, wherein the robot (100) comprises a pick-up unit (106) configured to pick up at least one object.
M107. The method according to the preceding embodiment, wherein the pick-up unit comprises at least one gripper (108).
M108. The method according to any of the preceding embodiments, wherein the robot (100) comprises a shelf unit (112) configured to store at least one object.
M109. The method according to any of the preceding embodiments and with the features of embodiments M50 and M71, wherein the tick controller module (306) obtains the number of execution cycles from the test loader module (302).
M110. The method according to any of the preceding embodiments and with the features of embodiment M11, wherein one of the at least one variable is an input variable provided as input to the root node (201).
Mill. The method according to the preceding embodiment, wherein the input variable is passed from one node to another.
M113. The method according to the preceding embodiment, wherein the input variable is provided to the root node by a user.
M114. The method according to any of the preceding embodiments and with the features of embodiments M11 and M13, wherein the input data comprise at least one of the at least one variable.
M115. The method according to any of the preceding embodiments and with the features of embodiments M11 and M15, wherein the output data comprise at least one of the at least one variable.

Below, system embodiments will be discussed. These embodiments are abbreviated by the letter "S" followed by a number. When reference is herein made to system embodiments, these embodiments are meant.
S1. A system comprising a testing computer (40) wherein the system is configured to carry out the method according to any of the preceding method embodiments.
S2. The system according to the preceding embodiment, wherein the system further comprises a robot (100), such as an autonomous forklift.
S3. The system according to the preceding embodiment, wherein the robot (100) includes a mobile base and/or a manipulator.
S4. The system according to any of 2 the preceding embodiments, wherein the robot (100) is an autonomously driving robot (100).
S5. The system according to any of the 3 preceding embodiments, wherein the robot (100) is adapted to pick up objects.
S6. The system according to any of the 4 preceding embodiments, wherein the robot (100) includes a sensor configured to sense information and wherein the robot (100) is configured to be affected to respond to the information.
S7. The system according to any of the 5 preceding embodiments, wherein the robot (100) comprises a drive unit configured to move the robot (100).
S8. The system according to any of the 6 preceding embodiments, wherein the robot (100) comprises a pick-up unit (106) configured to pick up at least one object.
S9. The system according to the preceding embodiment, wherein the pick-up unit comprises at least one gripper (108).
S10. The system according to any of the 8 preceding embodiments, wherein the robot (100) comprises a shelf unit (112) configured to store at least one object.
S11. The system according to any of the preceding system embodiments, wherein the testing computer (40) is a data processing system (40).
S12. The system according to any of the preceding system embodiments, wherein the testing computer (40) is configured to execute the testbench module (30) according to embodiment M47.
S13. The system according to any of the preceding system embodiments, wherein the testing computer (40) comprises a processing unit (450), such as, a central processing unit (450).
S14. The system according to any of the preceding system embodiments, wherein the testing computer (40) comprises a memory component (440).
S15. The system according to the preceding embodiment, wherein the memory component stores the testbench module (30) according to embodiment M47.
S16. The system according to any of the preceding system embodiments, wherein the testing computer (40) comprises an external communication component (430) configured to send and/or receive data to/from an external device.
S17. The system according to any of the preceding system embodiments, wherein the testing computer (40) comprises an internal communication component (460) configured to allow internal components (410-450) of the testing computer (40) to communicate with each other.
S18. The system according to the preceding embodiment, wherein the internal communication component (460) comprises a bus.
S19. The system according to any of the preceding system embodiments, wherein the testing computer (40) comprises an input user interface (410) configured to allow a user of the testing computer (40) to provide at least one input to the testing computer (40).
S20. The system according to any of the preceding system embodiments, wherein the testing computer (40) comprises an output user interface (420).
S21. The system according to the preceding embodiment, wherein the output user interface (420) comprises a display (420) configured to display a graphical representation of the behavior tree (20).
S22. The system according to any of the 2 preceding embodiments, wherein the display (420) is configured to display the graphical representation generated by the behavior tree editor module (310), according to embodiment M72.
S23. The system according to any of the preceding system embodiments and with the features of embodiment S2, wherein the robot (100) comprises a linear stage configured to carry at least one object and to change a vertical position of the object. Below, further embodiments will be discussed.
M115. The method according to any of the preceding embodiments, wherein the method comprises utilizing the system according to any of the preceding system embodiments.
C1. A computer program product comprising instructions which when executed by a system comprising a testing computer (40) and further optionally a robot, causes the system to carry out the method according to any of the preceding method embodiments.
C2. A computer program product comprising instructions which when executed by a testing computer (40), causes the testing computer (40) to carry out the method according to any of the preceding method embodiments and without the features of embodiment M2.
C3. The computer program product according to any of the 2 preceding embodiments, comprising the testbench module (30).
C4. The computer program product according to the preceding embodiment, wherein the testbench module (30) comprises any of the modules of embodiments M48 to M80.

### Brief description of the drawings

- Fig. 1: depicts a robot and a shelf storing a plurality of objects;
- Fig. 2: depicts a behavior tree used to control a robot;
- Fig. 3: depicts a testbench module; and
- Fig. 4: depicts a testing computer.

### Detailed description of the drawings

In the following, exemplary embodiments of the invention will be described, referring to the figures. These examples are provided to give further understanding of the invention, without limiting its scope.

In the following description, a series of features and/or steps are described. The skilled person will appreciate that unless explicitly required and/or unless required by context, the order of features and steps is not critical for the resulting configuration and its effect. Further, it will be apparent to the skilled person that irrespective of the order of features and steps, the presence or absence of time delay between steps can be present between some or all of the described steps.

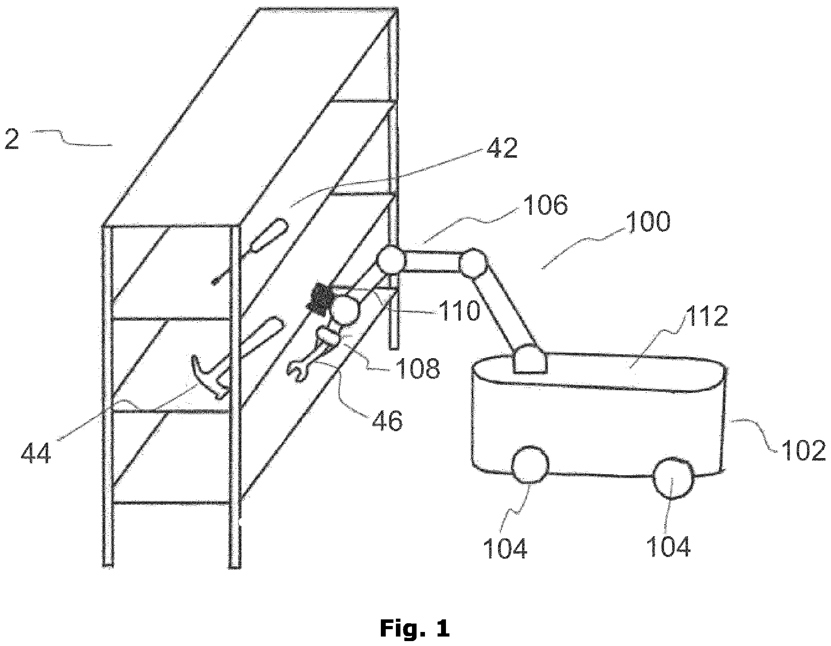

**Fig. 1** depicts a robot 100. It also depicts a shelf 2 wherein a plurality of different objects 42, 44, 46 can be located. As depicted, the robot 100 may comprise a base 102 including a plurality of wheels 104 (only two of which are depicted in Fig. 1) such that the robot 100 may drive. On the base 102, a pick-up unit 106 can be located. In the depicted embodiment, the pick-up unit 106 is a grappler having one or more joints. A gripper 108 adapted to grip or pick up objects can be provided at the end of the pick-up unit 106. Furthermore, at the end of the pick-up unit 106, a camera 110 may be provided. On top of the base 102, there may be a space 112 to place objects, e.g., objects 42-46. For example, the robot 100 may comprise a shelf unit 112 to store the objects 42-46.

The robot 100 may be an autonomous robot 100. That is, the robot 100 may be configured to drive autonomously. Additionally or alternatively, the robot 100 may be configured to pick-up and/or release objects autonomously. The robot 100 may in particular be used in a warehouse to pick up goods, e.g., objects 42-46 and to bring the objects 42-46 to a desired location.

A typical usage of such a robot 100 will now be described. The robot 100 may be tasked, e.g., by a user, to bring certain objects, e.g., a screw driver 42 and a wrench 46 from the shelf 2 to a destination location. The destination location may, e.g., be a location where the objects may be packed for shipping. This information, e.g., objects to pick and destination location may be communicated to the robot 100, e.g., by means of known communication standards, such a wireless LAN. The robot 100 may autonomously navigate to the shelf 2 where the respective objects are stored. To do so, the robot 100 may access a computer memory storing the information about which object is stored in which shelf 2 of the warehouse. The robot 100 may navigate to the correct shelf 2 by means of a driving unit. Once the robot 100 has reached the correct shelf 2, the robot 100 may locate the exact location of the objects (here: the screw driver 42 and the wrench 46) by means of the camera 110. The gripper 108 may then be positioned by means of the pick-up unit 106 to the correct location to pick up the wrench 46 (as depicted in Fig. 1). Once the gripper 108 has gripped the wrench 46, the pick-up unit 106 may place the wrench 42 on the shelf unit 112. Then, this gripping and placement procedure may be repeated for screw driver 42 to also place the screw driver 42 on the shelf unit 112.

Once the desired objects are placed on the shelf unit 112, the robot 100 may navigate to the destination location, e.g., to the location for packing and/or shipping of the objects.

The robot 100 may be controlled by a particular process. This process controls the robot 100 and prioritizes the different tasks the robot 100 may have to perform. For such an autonomously driving and operating robot 100, the different tasks to be performed and to be prioritized may be much more versatile than for simpler robots. To control the robot 100, a behavior tree 20 may be used.

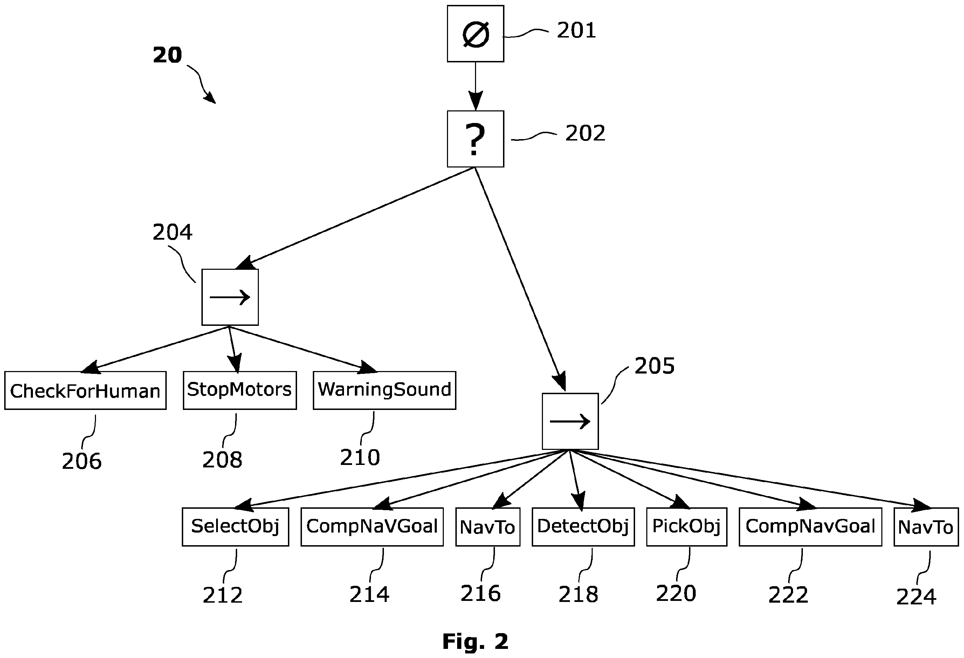

**Fig. 2** depicts an exemplary behavior tree (BT) 20, which may interchangeably be referred to as a behavior tree structure 20 or for the sake of brevity as a tree 20. The BT 20 comprises a plurality of nodes 201-224 which are interconnected with directed edges. The nodes 201-224 are indicated in Fig. 2 with boxes and the directed edges with the straight arrows. Each directed edge connects a respective pair of nodes by originating from one of the nodes in the pair, which is thus defined as a parent node in relation to the other node in the pair, towards the other node in the pair, which is thus defined as a child node in relation to the other node in the pair. During the execution of the BT, each parent node calls one or more of its child nodes. Thus, the BT can be traversed from higher ranking nodes to lower ranking ones during execution.

Each node of the tree 20 is configured to return a state indicative of its execution status. Typically, each node can return its state to its parent node (except for root node 201 which has no parent node). The state can be selected from a list of node states which generally includes: SUCCESS, FAILURE and RUNNING.

The BT 20 comprises a root node 201, which in the Figure is identified as a box with a null sign "Ø". Root node 201 has no incoming edge, but only one outgoing edge towards node 202. An execution cycle of the BT starts with the execution of the root node 201.

In addition to the root node 201, the BT comprises leaf nodes 206-224. These are nodes which comprise one incoming edge but no outgoing edge. In other words, leaf nodes 206-224 comprise no child nodes. Typically, leaf nodes relate to actions or status checks that the robot can perform. For example, node 206 "CheckForHuman" can cause the robot 100 to check and determine whether there are any humans in the vicinity of the robot 100. For example, upon execution of node 206, the robot 100 may use its sensors to detect whether humans are in the vicinity. Node 208 "StopMotors" can cause the robot 100 to stop its motors. For example, the robot 100 may deactivate its driving unit upon execution of node 208. Node 210 "WarningSound", upon execution may cause the robot 100 to generate a warning sound. Node 212 "SelectObj" may cause the robot 100 to receive an indication of an object to pick. For example, node 212 may be a consuming node waiting for input data. Node 214 "CompNaVGoal" may calculate a route for arriving at the location of the object selected in node 212. Data about the object selected in node 212 can be communicated from node 212 to node 214. Node 216 "NavTo" upon execution may activate the driving unit of the robot 100 causing the robot to drive to the location determined by node 214.

Said location can be communicated from node 214 to node 216. Node 218 may cause the robot 100 to attempt to detect the object (e.g., using the camera 110). Node 220 "PickObj" may cause the robot 100 to activate its pick-up unit 106 and the gripper 108 to pick up the. Node 222 "CompNavGoal", similar to node 214, may calculate a next location where the robot 100 needs to drive. However, node 222 may determine a destination location where the object picked up in node 220 needs to be transported. Node 224 "NavTo" upon execution may activate the driving unit of the robot 100 causing the robot to drive to the location determined by node 222.

The leaf nodes 206-224 may be connected to the root node 201 via intermediate nodes 202-206. The intermediate nodes 202-205 comprise one incoming edge and one or more outgoing edge. That is, each intermediate node 202-205 can comprise a parent node and one or more child nodes. Some intermediate nodes 202-205 can be configured to control the flow of execution of the BT and can thus be referred to as control-flow nodes. The control flow nodes 202-205 can be configured to call their child nodes according to predetermined conditions. Some intermediate nodes 202-205 can have auxiliary functions. These intermediate nodes can be referred to as decorator nodes (not shown). Some functions that the decorator nodes can comprise are: time logging, variable value logging, negating the return state of its child node, etc. Typically, decorator nodes comprise one parent node and one child node.

A first intermediate node 202 is a child node of the root node 201. In the depicted example, this node 201 is a selector node 202 generally identified by a box with a question mark "?". Selector node 202 is configured to call its child nodes according to a predetermined order until one of them succeeds. In other words, the selector node 202 will succeed (and thus return the state SUCCESS) if one of its child nodes succeeds and it will fail (and thus return the state FAILURE) if all of its child nodes fail. The selector node 202 will return RUNNING if the child node it has called returns RUNNING.

Selector node 202 has two child nodes 204, 205 in the example depicted in Fig. 2. In Fig. 2 the order in which the selector node 202 calls its child nodes is depicted from left to write, i.e., child node 204 will be called before child node 205. Moreover, child node 205 will only be called if child node 204 fails.

Each of the child nodes 204 and 205, in the depicted example, is an intermediate node. More particularly, both of them are control flow nodes (in this example) and even more particularly, they are sequence nodes 204, 205. Sequence nodes 204, 205 are generally identified by a box with an arrow sign "→". The sequence nodes 204, 205 are configured to call their child nodes in order until one of them fails. In other words, the sequence nodes 204, 205 will succeed (and thus return the state SUCCESS) if all of its child nodes succeed and it will fail (and thus return the state FAILURE) if all one of its child nodes fail. The sequence nodes 204, 205 will return RUNNING if the child node it has called returns RUNNING.

Sequence node 204 has three child nodes 206-210. It first calls node 206 (i.e., its left most child node) checking whether or not a human is present (e.g., in the vicinity of the robot 100 and/or in the direction the robot 100 is going and/or alternatively within a predefined distance from robot 100). If this condition is met, node 206 returns SUCCESS to node 204. Node 204 then calls node 208 stopping the motor of the robot. Node 208 returns SUCCESS once the motor is stopped to node 204 which then calls node 210 triggering a warning sound. Once this warning sound has been generated, node 210 returns SUCCESS to node 204. In turn, node 204 returns SUCCESS to its parent node, which is the selector node 202. The selector node 202 will then not call its child 205. Instead, given that one of its children nodes has succeeded, it will return SUCCESS to its parent node which is the root node. It is noted that while each of the leaf nodes 206, 208 and 210 is executing (e.g., while the robot 100 is checking for humans, while the motors are being stopped and while the sound is being generated) the respective nodes will return the state RUNNING, which will be traversed up the BT.

It is noted that the behavior tree structure 20 in Fig. 2 is for illustrative purpose only and is therefore relatively simple. In particular, some nodes may be omitted for clarity of illustration and description. For example, in between sequence node 204 and action node 208, there may be included additional decorator node(s) (not depicted), such as an Ignore Failure node or a Retry node to ensure that, when a human is detected in node 206, the motor is stopped and the routine only continues further when the motor is stopped in sequence 204. The same may apply to a potential additional node being present between sequence node 204 and action node 210 to ensure that a warning sound is always triggered upon detection of a human.

If node 206 returns FAILURE, node 202 will then call its other child node 205.

Sequence node 205 and its child nodes 212 to 224 include a general task to be carried out by robot 100 "to get and bring the object(s)". As discussed above, the sequence node 205 calls its child nodes in a specific order (in the representation: from left to right). First, the node 212 "SelectObj" is called. This node may 212 check whether data relating to an object to be picked have been provided. If no such data has been provided, node 212 returns FAILURE to its parent node 205, which terminates the sequence of node 205 and node 205 in turn returns FAILURE to its parent node 202.

If, however, data relating to an object to be picked has been provided, e.g., an object has been selected by a user, node 212 returns SUCCESS to its parent node 205. The selector node 205 then calls the next child node in the sequence, i.e., node 214. Node 214 is a subroutine for computing the navigation route to the selected object (e.g., to the wrench 46). This may include further steps not depicted in Fig. 2 (e.g., retrieving the position of the wrench 46 in a data set; calculating the fastest route to this location, etc.). As long as the computation in node 214 is ongoing, it returns RUNNING to its parent node 205 (parent node 205 would then also return RUNNING to node 202). If node 214 finds that completion of its task is impossible (e.g., the selected object is not in the warehouse), it returns FAILURE to sequence node 205. If the task is completed, i.e., the navigation route is computed, node 214 returns SUCCESS to its parent node 205.

Node 205 calls its child nodes in sequence. Thus, once child 214 has been successful (i.e., the navigation route has been determined), child node 216 is called for navigating the robot 100 to the location of the object. Once this task succeeds, the object is detected in node 218. Upon successful detection, node 220 is called and the object is picked up, (in the robot depicted in Fig. 1, the object could also be placed on shelf unit 112 in an additional sub routine). Once the object is picked up successfully, node 222 is called and the navigation route to the destination location for the picked-up object is computed. Upon successful computation of the destination location, node 224 is called and the robot is then navigated to the destination location.

Thus, the BT depicted in Fig. 2 illustrates two general routines of the robot 100, namely: a safety routine and an object transport routine. Each of these routines is implemented in the BT via respective sub-trees. In particular, the safety routine is implemented via the sub-tree 204, 206-210 and the object transport routine is implemented via the sub-tree 205, 212-224.

This example illustrates how different routines may be combined with one another. The routines are always called in order. Thus, it is very easy to implement routines with different priorities and visualize the respective priorities (here: safety routine would have a higher priority than the object transport routine), which makes this architecture particularly efficient and fail-safe.

Furthermore, such a process for controlling the robot 100 may also be adapted easily, i.e., additional functionality may be added. For example, a "HumanNotPresent" node can be added as a child node with the highest priority of the sequence node 205. This node 205 can double-check the result of node 206 to guarantee that there are no humans present before picking up and transporting objects. Altneratively or additionally, said node may be provided before each "NavTo" node 216, 224.

The BT 20 can be executed by calling its root node 201. As a result, the BT 20 can be traversed from the root node 201 to one or more of its leaf nodes 206-224. This can constitute an execution cycle of the BT 20. That is, calling the root node 201 of the BT 20 can cause an execution cycle of the BT. During an execution cycle, the BT can be traversed from the root node 201 to one or more of its leaf nodes 206-224 according to a traversal path, wherein each node in the traversal path is executed. The traversal path in which the BT 20 is traversed during an execution cycle can depend on the status of the robot 100 and on the intermediate nodes 202-205.

For example, in a first scenario, there is no human in the vicinity of the robot 100. In this scenario, the BT 20 is expected to execute according to the traversal path 201, 202, 204, 206, 205, 212-224. It will be understood that the jump from node 206 to node 205 is done via intermediate nodes 204 and 202. In a second example, there is a human in the vicinity of the robot 100. In this scenario, the BT 20 is expected to execute according to the traversal path 201, 202, 204, 206, 208, 210.

Moreover, if the BT is erroneously implemented, the BT 20 will not produce expected behaviors of the robot. For example, consider the example that node 202 has erroneously been implemented as a sequence node instead of a selector node. In this example, if there is a human in the vicinity of the robot 100, the BT will execute according to the following traversal path: 201, 202, 204, 206, 208, 210, 205, 212-224. This is different from the expected traversal path 201, 202, 204, 206, 208, 210. In addition, it is erroneous behavior because the robot 100 transports the object even though there is a human in the vicinity of the robot 100.

Thus, ensuring a proper implementation of the BT 20 can be advantageous for a proper and safe operation of the robot 100.

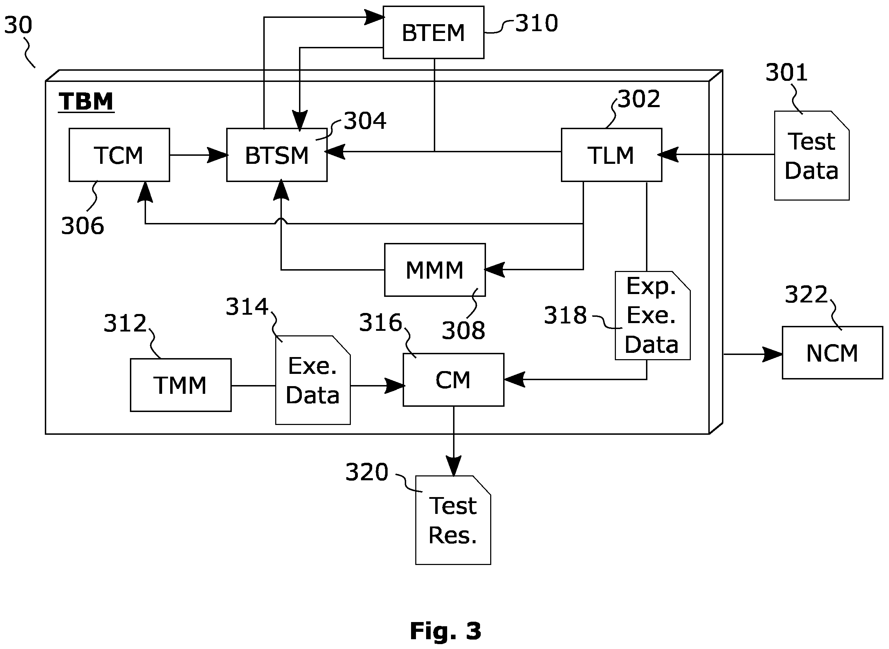

**Fig. 3** illustrates a testbench module 30.

The testbench module 30 can execute behavior tree integration testing and simulation in order to validate the robustness and accuracy of behavior tree based robot behaviors. The testbench module 30 can be configured to operate offline, which can eliminate the need for hardware sensors and actuators during testing. Additionally, the testbench module 30 can enable examination of entire behavior tree structures or specific subtrees, allowing for validation of subtree properties with minimal maintenance. The test bench module 30 can advantageously alleviate the need to modify for the purpose of testing the behavior tree or subtree under test, its connections, and capabilities of each task. The testbench module 30 may also alleviate the need of adding code for testing or debugging to the run-time code of the behavior tree. The testbench module 30 may also allow for the mocking of tasks that require hardware components. In a second stage, the testbench module 30 can record the execution traces of the behavior tree running live on robots, which can then be replayed and visualized to analyze the recorded data.

Embodiments of the present invention may thus relate to a framework for verifying the correct sequence of events in a behavior tree or subtree. This may include comparing the actual sequence produced by the behavior tree with an expected sequence, which may be an exact or an approximate match. The user data provided as input to the behavior tree and status of input and output tasks within the sequence can be specified and verified to ensure the behavior tree is functioning correctly. Tests can be defined, e.g., as Python classes, for a given tree or subtree, specifying the initial user data, mocked tasks, required parameters, expected tree path, and final root status. It is also possible to specify the number of ticks required for the desired outcome.

Fig. 3 depicts a representation of the testbench module 30 and the modules that may compose it. It will be understood that not all modules depicted in Fig. 3 and discussed below are necessary and that some of the modules may be optional.

The testbench module 30 can comprise a test loader module (TLM) 302. This module 302 can be configured for setting up the test. The test loader module 302 can for exempla obtain test data 301 which can comprise the test definition. The definition can be written as a Python class and can be located in a pytest file.

The test data 301 can comprise initial variable values of at least one variable of the behavior tree, expected execution data, number of execution cycles, list of the nodes to be mocked, list of mock computer instructions and/or node parameters. The test data 301 may also comprise a computer representation of the behavior tree to be tested. Said computer representation of the behavior tree can for example be in the form of a JavaScript Object Notation (JSON) file.

The testbench module 30 can comprise a behavior tree server module (BTSM) 304. The behavior tree server module 304 can be configured to generate and execute a behavior tree based on a computer representation of it, which can be in the form of a JSON file. The behavior tree server module 304 can obtain the computer representation of the behavior tree from the test loader module 302. Alternatively or additionally, it can obtain the computer representation of the behavior tree from a behavior tree editor module 310 (discussed below). The behavior tree server module 304 can execute the behavior tree for at least one execution cycle.

The behavior tree editor module (BTEM) 310, can generate a graphical representation of the behavior tree. Said graphical representation can indicate the execution state of the behavior tree in a user-friendly manner while the behavior tree is running. The behavior tree editor module 310 can allow observing how the behavior tree behaves when tests are run or when a log of a behavior tree running in the field (i.e., live on a robot) is replayed. Although in Fig. 3, the behavior tree editor module 310 is depicted as an external and separate module from the testbench module 30, it will be understood that in some embodiments, the testbench module 30 can comprise the behavior tree editor module 310. That is, the behavior tree editor module 310 may alternatively be a part of the testbench module 30.

The behavior tree server module 304 and the behavior tree editor module 310 can exchange data between each other. For example, the behavior tree editor module 310 may provide a computer representation of the behavior tree to the behavior tree server module 304. The behavior tree server module 304 may provide information to the behavior tree editor module 310 allowing the behavior tree editor module 310 to indicate the execution state of the behavior tree, while the behavior tree server module 304 executes the behavior tree. For example, the behavior tree server module 304 can provide debug information to the behavior tree editor module 310.

The testbench module 30 can further comprise a task monitor module (TMM) 312 which can be configured to capture user data (UD) for every node that has been ticked (i.e., called, executed), both before and after the tick. It can alternatively or additionally capture the input constants for each of the nodes before and after the tick. Alternatively or additionally, it can record the sequence of nodes that were ticked, including their unique identifier (UUID), label, and type. Finally, it can capture the status of the root node.

It will be understood that the verb "tick" can synonymously be used with "call" or "execute".

The task monitor module 30 can thus record execution data while the behavior tree server module 304 executes the behavior tree for at least one execution cycle.

The present invention can allow excluding mocking logic from functional code. To achieve this, the creation of nodes can be monkey-patched in the behavior tree server module 304. This can ensure that the mock manager module (MMM) 308 can handle the instantiation process.

The testbench module 30 can comprise a mock manager module 308. The mock manager module 308 can store a database of nodes that can be mocked along with their sequences of behaviors as lists. By using monkey-patching, the mock manager module 308 can instantiate nodes when the behavior tree server module 304 loads a behavior tree. The mock manager module 308 can then refer to its database to determine whether a mocked node should be created instead of a real instance of the node. The behavior of each mocked node can be defined as a list of functions that replace the node's run method. While only one behavior can be executed at each tick, the tick count of the node can indicate which function from the list to execute. When the list runs out, the last behavior can be repeated. The supported behaviors can include adding/modifying variables of the node and calling a method of an object associated with the variables. By default, the mock manager module 308 can mock a node such that it returns SUCCESS and does not produce/modify variables.

The testbench module 30 can comprise a tick controller module (TCM) 306 which can control the number of times the behavior tree is ticked. By default, the tick controller module 306 can be configured to tick the behavior tree up to 10 times or until it stops by itself. If a maximum number of execution cycles is specified in the test data 301, the tick controller module can be configured to tick the behavior tree up to said maximum number of times or until it stops by itself, whichever comes first.

A node coverage module (NCM) 322 can further be provided. The node coverage module 322 can be configured to count the number of nodes that have been ticked during the tests in comparison to the total number of nodes in the behavior tree. Although in Fig. 3, the node coverage module 322 is depicted as an external and separate module from the testbench module 30, it will be understood that in some embodiments, the testbench module 30 can comprise the node coverage module 322. That is, the node coverage module 322 may alternatively be a part of the testbench module 30.

The testbench module 30 may further comprise a checker module (CM) 316. The checker module 316 can obtain execution data 316 from the test loader module 312 and expected execution data 318 from the test loader module 302. The checker module 316 can then compare the execution data 316 and the expected execution data 318 to generate a test result 320. The test result 320 can indicate whether the test is passed or failed.

Based on the test result 320, the behavior tree can be revised.

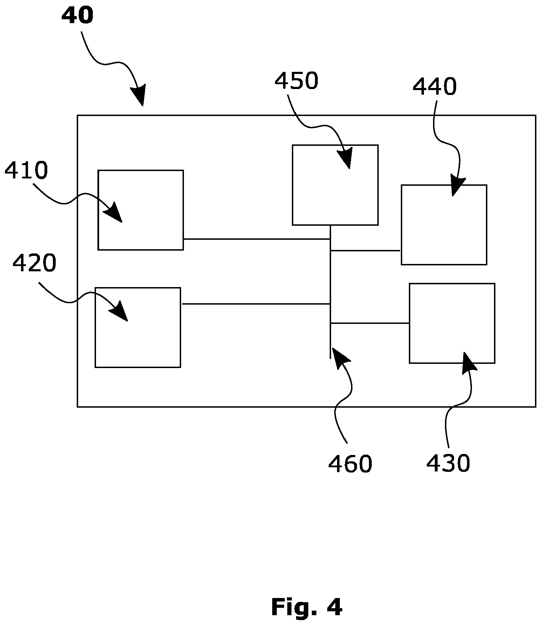

**Fig. 4** depicts a testing computer 40. The testing computer 40 can be a data processing system 40. The testing computer 40 can be configured test a behavior tree. Preferably, the testing computer 40 can be configured to execute the testbench module 30 depicted in Fig. 3.

The testing computer 40 may comprise a processing unit 450 which may be singular or plural, and may be, but not limited to, a CPU (central processing unit), GPU (graphical processing unit), DSP (digital signal processor), APU (accelerator processing unit), ASIC (application-specific integrated circuit), ASIP (application-specific instruction-set processor) or FPGA (field programable gate array). The processing unit 450 may comprise one or more micro-controller units.

Further, the testing computer 40 may comprise a memory component 440 which may be singular or plural, and may be, but is not limited to, a volatile or non-volatile memory, such as a random-access memory (RAM), Dynamic RAM (DRAM), Synchronous Dynamic RAM (SDRAM), static RAM (SRAM), Flash Memory, Magneto-resistive RAM (MRAM), Ferroelectric RAM (F-RAM), or Parameter RAM (P-RAM).

The testbench module 30 can for example be stored and/or loaded in the memory component 440.

Further the testing computer 40 may comprise an external communication component 430. The external communication component 430 can be configured to send and/or receive data to/from an external device. The external communication component 430 may comprise an antenna (e.g., WIFI antenna, NFC antenna, 4G/3G/4G/5G antenna and the like), USB port/plug, LAN port/plug, contact pads offering electrical connectivity, smart card reader and the like. The external communication component 430 can send and/or receive data based on a communication protocol. Said data can be stored in the memory component 440 and can be executed by the processing unit 450. The external communication component 430 can be connected to the internal communication component 460. Thus, data received by the external communication component 430 (e.g., test data 301) can be provided to the memory component 440 and/or to the processing unit 450. Similarly, data stored on the memory component 440 and/or data generated by the processing unit 450 (e.g., test result 320) can be provided to the external communication component 430 to be transmitted to an external device.

Further, the testing computer 40 may comprise an internal communication component 460 configured to allow the internal components 410-450 of the testing computer 40 to communicate with each other. The internal communication component can, for example, comprise a bus connection 460.

The testing computer 40 may comprise an input user interface 410 which can allow a user of the testing computer 40 to provide at least one input to the testing computer 40. For example, the input user interface 410 may comprise a button, keyboard, trackpad, mouse, touchscreen, joystick and the like.

The testing computer 40 may comprise an output user interface 420. For example, the output user interface 410 may comprise a display 420. The display 420 can allow the testing computer 40 to display the graphical representation generated by the behavior tree editor module 310.

While the present invention has been described with reference to particular embodiments, it is to be understood that these embodiments do not limit the scope of the invention, but merely serve to illustrate the invention.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A method comprising
providing a behavior tree (20) to a testing computer (40), wherein the behavior tree (20) is configured to control a robot (100) and comprises nodes including a root node (201) and leaf nodes (206-224), wherein each node comprises computer instructions, wherein some of the nodes when executed cause the robot (100) to perform respective tasks;
testing with the testing computer (40) the behavior tree (20), wherein testing the behavior tree (20) comprises:
executing the behavior tree (20) for at least one execution cycle,
recording execution data (314), and
comparing the execution data (314) with expected execution data (318) to determine a test result (320); and
wherein the method further comprises:
revising the behavior tree (20) based on the test result (320) to generate a revised behavior tree (20) for controlling the robot (100).

2. The method according to the preceding claim, wherein the method further comprises using the revised behavior tree (20) to operate the robot (100).

3. The method according to any of the preceding claims, wherein during each execution cycle, the behavior tree (20) is traversed from the root node (201) to at least one of the leaf nodes (206-224) according to a traversal path, wherein each of the nodes in the traversal path is executed, and
wherein the expected execution data (318) is indicative of at least one expected traversal path, each corresponding to a respective execution cycle, and wherein the test result (320) is indicative of whether each expected traversal path is traversed during the respective execution cycle.

4. The method according to any of the preceding claims, wherein the expected executed data is indicative of at least one expected sequence of nodes, each corresponding to a respective execution cycle, and wherein the test result (320) is indicative of whether the nodes in each expected sequence of nodes are executed during the respective execution cycle according to the respective expected sequence of nodes.

5. The method according to any of the preceding claims, wherein each node is configured to return a node state when executed, wherein the node state is selected from a list of node states.

6. The method according to the preceding claim, wherein the expected executed data is indicative of at least one expected node state, each corresponding to a respective node for a respective execution cycle, and wherein the test result (320) is indicative of whether each expected node state is returned by the respective node during the respective execution cycle.

7. The method according to any of the preceding claims, wherein the behavior tree (20) comprises at least one variable and wherein at least one of the nodes is configured to modify a value of the at least one variable when executed and
wherein the expected executed data is indicative of at least one expected variable value, each corresponding to a respective variable for a respective execution cycle, and wherein the test result (320) is indicative of whether each variable value is contained by the respective variable during the respective execution cycle.

8. The method according to any of the preceding claims, wherein at least one of the nodes is a consuming node configured to receive input data and to process the input data and
wherein the expected executed data is indicative of at least one expected input data, each corresponding to a respective consuming node for a respective execution cycle, and wherein the test result (320) is indicative of whether each expected input data is received by the respective consuming node during the respective execution cycle.

9. The method according to any of the preceding claims, wherein at least one of the nodes is a producing node configured to output output data and
wherein the expected executed data is indicative of at least one expected output data, each corresponding to a respective producing node for a respective execution cycle, and wherein the test result (320) is indicative of whether each expected output data is output by the respective producing node during the respective execution cycle.

10. The method according to any of the preceding claims, wherein the test result (320) comprises a pass indication or a failure indication and
wherein revising the behavior tree (20) based on the test result (320) comprises revising the behavior tree (20) upon the failure indication and
wherein the test result (320) comprises the pass indication if the execution data (314) match the expected execution data (318) and the failure indication otherwise.

11. The method according to the any of the preceding claims, wherein executing the behavior tree (20) comprises mocking at least one of the nodes, wherein mocking at least one of the nodes comprises, for each node being mocked, executing respective mock computer instructions instead of the computer instructions of the node being mocked and
wherein executing respective mock computer instructions instead of the computer instructions of the node being mocked comprises monkey-patching the respective mock computer instructions to the respective node being mocked.

12. The method according to the any of the preceding claims, wherein testing with the testing computer (40) the behavior tree (20) comprises executing with the testing computer (40) a testbench module (30) wherein the testbench module (30) comprises computer instructions which when executed by the testing computer (40) cause the testing computer (40) to test the behavior tree (20);
wherein the testbench module (30) comprises a behavior tree server module (304) configured to execute the behavior tree (20);
wherein the testbench module (30) comprises a task monitor module (312) configured to record the execution data (314);
wherein the testbench module (30) comprises a checker module (316) configured to compare the execution data (314) with the expected execution data (318) to determine the test result (320);
wherein the task monitor module (312) provides the execution data (314) to the checker module (316);
wherein the test loader module (302) provides the expected execution data (318) to the checker module (316).

13. A system comprising a testing computer (40), wherein the system is configured to carry out the method according to any of the preceding method claims.

14. The system according to the preceding claim, wherein the system further comprises a robot (100).

15. A computer program product comprising instructions which when executed by a system comprising a testing computer (40) and further optionally a robot, causes the system to carry out the method according to any of the claims 1 to 13.
